# EUROPÄISCHE PATENTSCHRIFT

(11) **EP 1 213 364 B1**
(45) Veröffentlichungstag und Bekanntmachung des Hinweises auf die Patenterteilung: **29.07.2009**
(21) Anmeldenummer: 01128726.5
(22) Anmeldetag: 03.12.2001
(51) Int. Cl.: C22B 21/00, C22B 9/16, F27B 3/20, F23C 5/06

(54) **Verfahren zum Einschmelzen von Metallschrott insbes. aus Aluminium unter Einsatz eines Brennstoff-Sauerstoffbrenners**
Method of smelting metal scrap such as aluminium using an oxygen-fuel burner
Procédé pour fondre des déchets métalliques comme de l'aluminium en utilisant un brûleur à oxygène-combustible

(30) Priorität: 06.12.2000 DE 10060951
(43) Veröffentlichungstag der Anmeldung: 12.06.2002
(73) Patentinhaber: Air Liquide Deutschland GmbH, 40235 Düsseldorf (DE); Messer Group GmbH, 65843 Sulzbach (DE)
(72) Erfinder: Wieck, Dietmar, 47918 Toenisvorst (DE); Spoljaric, Davor, 2103 Langenzersdorf (AT); Hengelmolen, Adrianus Jacobus, 5341 HC Oss (NL)
(74) Vertreter: Kahlhöfer, Hermann

(56) Entgegenhaltungen:
- EP-A- 0 686 807
- EP-A- 0 748 994
- EP-A- 0 942 247
- DE-A- 1 863 633
- DE-A- 4 142 401
- DE-C- 350 513
- US-A- 1 513 828
- US-A- 4 030 889
- US-A- 4 392 637
- US-A- 4 718 646
- US-A- 4 909 733
- DATABASE WPI Section Ch, Week 198451 Derwent Publications Ltd., London, GB; Class L01, AN 1984-317638 XP002231920 & SU 1 090 665 A (BAKI GLASS WKS), 7. Mai 1984 (1984-05-07)
- PATENT ABSTRACTS OF JAPAN vol. 1999, no. 02, 26. Februar 1999 (1999-02-26) & JP 10 311688 A (NIPPON SANSO KK), 24. November 1998 (1998-11-24)
- DATABASE WPI Section Ch, Week 199909 Derwent Publications Ltd., London, GB; Class M24, AN 1999-101449 XP002231921 & JP 10 330857 A (NIPPON SANSO CORP), 15. Dezember 1998 (1998-12-15)

## Beschreibung

Die vorliegende Erfindung betrifft ein Verfahren zum Einschmelzen von Metallschrott in einem Ofen, durch Erzeugen einer Metallschmelze unter Einsatz mindestens eines Brenners, mittels dem durch Zufuhr von Sauerstoff und Brennstoff eine in den Ofen gerichtete und auf die Metallschmelze einwirkende Brennerflamme erzeugt wird.

Der Einsatz von Brennstoff-Sauerstoffbrennern oder Luft-Sauerstoff-Mischbrenner in Industrieöfen zum Einschmelzen von stückigem Metall - wie beispielsweise zum Einschmelzen von Aluminiumschrott - ist bekannt, beispielsweise aus EP-A-0 686 807, DE-C-35 05 13, US 4,392,637 und DE-U-1 863 633.. Im Vergleich zu Schmelzverfahren, bei denen Luft als Oxidationsmittel eingesetzt wird, erhöht die Sauerstoff-Brenntechnik die Schmelzleistung des Ofens und reduziert den Energiebedarf. Die Einsparung an Brennstoff beruht im wesentlichen darauf, dass der Stickstoffanteil der Luft nicht aufgeheizt werden muss. Die daraus resultierenden geringeren Abgasmengen senken außerdem die Strömungsgeschwindigkeit der Gase im Ofen und damit die Staubemission. Bei den Mischbrennern (zum Beispiel sogenannte "Kombibrenner") wird der Brennstoff mit Luft oder mit sauerstoffangereicherter Luft oder mit Sauerstoff verbrannt. Zum Einschmelzen wird der metallische Rohstoff kontinuierlich oder chargenweise im Ofenraum aufgeschüttet und erschmolzen, indem der Rohstoff mittels Brennstoff-Sauerstoffbrenner von der Oberfläche der Schüttung aus, bzw. von der Schmelzoberfläche aus auf eine Temperatur oberhalb der Schmelztemperatur erhitzt wird.

Ein Problem beim Einsatz von Sauerstoffbrennern oder Mischbrennern besteht darin, dass die heiße konzentrierte Flamme zu Metallverlusten durch Oxidation des Metalls und zu höherem Verschleiß an Ofenmaterial - zum Beispiel der feuerfesten Auskleidung und dem Gewölbe bei einem Herdofen - führt.

Der Erfindung liegt daher die Aufgabe zugrunde, das bekannte Verfahren zum Einschmelzen von Metallschrott unter Einsatz eines Sauerstoffbrenners oder eines Mischbrenners so zu modifizieren, dass das einzuschmelzende Metall weniger oxidiert und der Verschleiß des Ofenmaterials vermindert wird.

Diese Aufgabe wird ausgehend von dem eingangs genannten Verfahren erfindungsgemäß dadurch gelöst, dass die lokale Einwirkung der Brennerflamme auf die Metallschmelze fortwährend verändert wird, wie definiert in Anspruch 1.

Dadurch, dass die lokale Einwirkung der Brennerflamme auf die Metaltschmelze fortwährend verändert wird, wird vermieden, dass die Metallschmelze und darin enthaltene, noch nicht aufgeschmolzene Metallteile örtlich überhitzt werden. Die Oxidation des Metalls wird so reduziert und das Metallausbringen erhöht.

Die Veränderung der lokalen Einwirkung erfolgt beispielsweise durch Änderungen der Brennerflamme hinsichtlich ihrer Geometrie, ihrer Ausbreitungsrichtung oder ihrer Temperatur.

Die lokale Einwirkung der Brennerflamme wird im Verlaufe des Einschmelzvorgangs "fortwährend" - das heißt kontinuierlich oder von Zeit zu Zeit - geändert. Die Änderungen der Brennerflamme hinsichtlich ihrer Geometrie, ihrer Ausbreitungsrichtung oder ihrer Temperatur, die somit kontinuierlich oder stufenweise erfolgen, wirken auch einer Überhitzung des Ofenmaterials entgegen, was den Verschleiß des Ofens vermindert.

Erfindungsgemäß wird die Hauptausbreitungsrichtung der Brennerflamme kontinuierlich oder stutenweise verändert. Die Brennerflamme wird hierbei im Ofenraum hin- und herbewegt, so dass sich auf einfache Art und Weise eine lokale Überhitzung im Ofenraum verhindern lässt. Mit der Änderung der Hauptausbreitungsrichtung kann eine Änderung der Flammengeometrie einhergehen.

Als günstig hat sich eine Verfahrensvariante erwiesen, bei der die Hauptausbreitungsrichtung mit der Horizontalen einen Kippwinkel einschließt, wobei der Kippwinkel fortwährend verändert wird. Die Hauptausbreitungsrichtung verläuft dabei parallel oder in einem spitzen Winkel zum Schmelzoberfläche. Die Änderung des Kippwinkels bewirkt eine Verlagerung des Auftreffpunktes der Brennerflamme auf der Oberfläche der Metallschmelze. Unter dem Auftreffpunkt wird die Verlängerung der Hauptausbreitungsrichtung bis zur Schmelzoberfläche verstanden.

Die Auftreffpunkte bewegen sich dabei entlang der Vertikalprojektion der Brennerflamme auf die Schmelzoberfläche hin und her. Diese Verfahrensweise wird im folgenden als "Fächerprinzip" bezeichnet.

Bei einer anderen bevorzugten Verfahrensvariante, die alternativ oder parallel zum "Fächerprinzip" einsetzbar ist, ist der Brenner um eine im wesentlichen vertikale Schwenkachse schwenkbar, wobei die Hauptausbreitungsrichtung der Brennerflamme durch Schwenken um die Schwenkachse fortwährend verändert wird. Auch bei dieser Verfahrensweise verläuft die Hauptausbreitungsrichtung parallel oder in einem spitzen Winkel zum Schmelzoberfläche. Durch kontinuierliches oder zeitweises Schwenken um die Schwenkachse wird der Auftreffpunkt der Brennerflamme auf die Schmelzoberfläche fortwährend verändert. Die Auftreffpunkte liegen hierbei auf einem Teilkreis um die Schwenkachse.

Erfindungsgemäß erfolgt die Veränderung der Hauptausbreitungsrichtung durch Ablenkung der Brennerflamme. Durch Ablenkung der Brennerflamme wird deren lokale Einwirkung auf die Metallschmelze verändert, ohne dass eine mechanische Bewegung des Brenners durch Kippen oder Schwenken erforderlich ist. Die Brennerflamme lässt sich zum Beispiel durch Einwirkung mechanischer Mittel oder durch kontinuierliche oder stufenweise Änderungen der thermischen Verhältnisse im Ofen ablenken.

Besonders einfach und reproduzierbar gestaltet sich jedoch die erfindungsgemäße Verfahrensweise, bei der die Ablenkung der Brennerflamme durch Einwirkung eines Ablenk-Gasstroms bewirkt wird. Bei dem Ablenk-Gasstroms handelt es sich um einen sich ändernden, auf die Ausbreitungsrichtung der Brennerflamme einwirkenden Gasstrom. Für die Ablenkung der Brennerflamme sind bewegende mechanische Teile somit nicht erforderlich.

In einer besonders bevorzugten Verfahrensweise wird die Brennerflamme mittels eines Ablenk-Gasstromes abgelenkt, der oberhalb der Brennerflamme in den Ofen eingespeist wird. Bei dieser Verfahrensweise wird insbesondere das Gewölbe vor der Strahlung der Flamme zusätzlich geschützt und dadurch der Verschleiß an Feuerfestmaterial reduziert.

Es hat sich auch als vorteilhaft erwiesen, dass der Ablenk-Gasstrom wechselweise beiderseits der Brennerflamme in den Ofen eingespeist und verändert wird. Der Ablenk-Gasstrom wird wechselweise auf der einen Seite und auf der anderen Seite der Brennerflamme eingespeist. Dabei wird er auf der einen Seite entweder ganz oder teilweise abgeschaltet und im gleichen Maße auf der anderen Seite ganz oder teilweise zugeschaltet. Dabei bleibt der Gesamtvolumenstrom des Ablenk-Gasstroms zeitlich konstant.

Diese Verfahrensweise eignet sich daher insbesondere für eine Verfahrensvariante, bei der als Ablenk-Gasstrom die Sauerstoff-Zufuhr zum Brenner eingesetzt wird. Sauerstoff wird dem Brenner als Oxidationsmittel für den Brennstoff zugeführt. Durch Änderung des Sauerstoff-Gasstromes für die Brennerflamme ändert sich deren Temperatur und Länge. Auch eine seitliche oder vertikale Ablenkung der Brennerflamme ist leicht realisierbar, wenn der sich ändernde Sauerstoff-Gasstrom nicht koaxial zum Brennstoffstrom in die Brennerflamme eingespeist wird, sondern seitlich davon. Durch wechselweise Zuschaltung der Sauerstoff-Zufuhr beiderseits der Brennerflamme - wie oben beschreiben - lässt sich die Sauerstoffzufuhr und damit die Stöchiometrie der Brennerflamme zeitlich konstant halten. Bei einem Brenner mit horizontal orientierter Längsachse wird beispielsweise der Kippwinkel der Hauptausbreitungsrichtung durch fortwährende Änderung der Sauerstoffzufuhr verändert, wobei die Sauerstoffzufuhr zur Brennerflamme unterhalb oder oberhalb der Brennstoffzufuhr erfolgt.

Eine Ablenkung der Brennerflamme kann auch durch fortwährende Änderung anderer Ströme, etwa des Brennstoffstrom, anstelle des Sauerstoff-Gasstromes erreicht werden. Dabei hat es sich besonders bewährt, als Ablenk-Gasstrom ein Ofenabgas einzusetzen. Das Ofenabgas besteht hauptsächlich aus den Verbrennungsprodukten CO₂ und H₂O. Es wird aus dem Ofen abgesaugt und diesem als Ablenk-Gasstrom wieder zugeführt. Die Ofenabgas kann einseitig oder wechselweise beidseitig zur Brennerflamme eingespeist werden. Da das Ofenabgas teilweise abgekühft ist, trägt es zu einer Senkung der Temperatur der Brennerflamme bei, wodurch die Bildung von NOₓ gesenkt wird

Zweckmäßigerweise wird der Ablenk-Gasstrom durch Umwälzung von Ofenabgas mittels eines Heißgasgebläses erzeugt. Das Heißgasgebläse sorgt für die Zirkulation des Ofenabgases und es ist regelbar, so dass eine definierte Ablenkung der Brennerflamme und somit eine reproduzierbare Änderung ihrer Einwirkung auf die Metallschmelze gewährleistet werden kann.

Nachfolgend wird das erfindungsgemäße Verfahren anhand von Ausführungsbeispielen und einer Zeichnung näher erläutert. In der Zeichnung zeigen im einzelnen in schematischer Darstellung:
- **Figur 1**: einen Herdofen mit horizontal orientiertem Sauerstoffbrenner, und
- **Figur 2**: einen Herdofen mit vertikal orientiertem Sauerstoffbrenner.

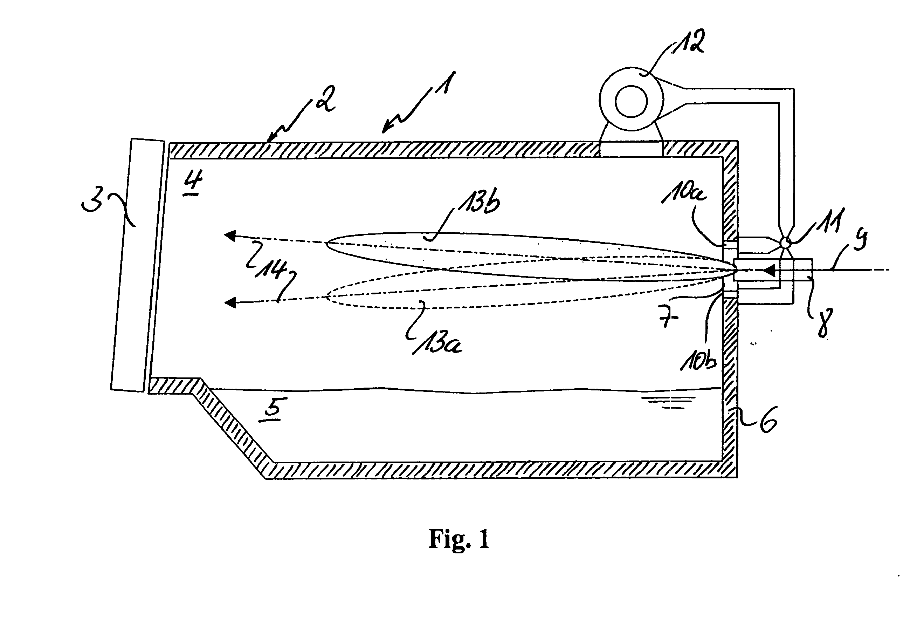

Bei dem in **Figur 1** dargestellten Herdofen 1 umschließt ein Ofengehäuse 2 einen Ofenraum 4, der eine Schmelze 5 aus Aluminiumschrott aufnimmt. Das Ofengehäuse 2 ist mittels einer Chargentür 3 verschließbar. In einer Seitenwand 6 des Ofengehäuses 2 ist ein Durchlass 7 vorgesehen, in der ein Sauerstoffbrenner 8 mit horizontaler Orientierung montiert ist. Dem Sauerstoffbrenner 8 werden Brennstoff und Sauerstoff zugeführt, wie dies anhand des Richtungspfeils 9 angedeutet ist. Oberhalb und unterhalb des Durchlasses 7 ist jeweils ein Gaseinlass 10a, 10b vorgesehen. Die Gaseinlässe 10a, 10b sind jeweils mit einem Auslass eines elektrisch ansteuerbaren Dreiwege-Kugelhahns 11 verbunden.

Im Gewölbebereich des Ofengehäuses 2 ist ein Heißgasgebläse 12 zum Absaugen von Abgas aus dem Ofenraum 4 vorgesehen. Das Heißgasgebläse 12 ist mit dem Einlass des Dreiwege-Kugelhahns 11 verbunden.

Nachfolgend wird ein Ausführungsbeispiel für das erfindungsgemäße Verfahren anhand Figur 1 näher erläutert:

Eine Charge Aluminiumschrott wird im Ofenraum 4 aufgeschüttet und mittels des Sauerstoffbrenners 8 erhitzt und erschmolzen. Hierzu wird dem Sauerstoffbrenner 8 der Brennstoff und Sauerstoff zugeführt, so dass sich eine Brennerflamme 13a; 13b bildet, die die Oberfläche der Schüttung aus Aluminiumschrott bzw. die Schmelzoberfläche überstreicht.

Um ein Überhitzen der Schmelze 5 durch die Brennerflamme 13a; 13b zu verhindern, wird die lokale Einwirkung der Brennerflamme 13a; 13b auf die Schmelze 5 von Zeit zu Zeit verändert, indem die Brennerflamme 13a; 13b ausgelenkt und dadurch ihre Ausbreitungsrichtung (Richtungspfeile 14) verändert wird. Die Auslenkung der Brennerflamme 13a; 13b erfolgt dadurch, dass über das Heißgasgebläse 12 Abgas aus dem Ofenraum 4 abgesaugt und über den Dreiwege-Kugelhahn 11 elektrisch gesteuert als "Ablenk-Gasstrom" wechselweise entweder dem oberen Gaseinlass 10a oder dem unteren Gaseinlass 10b zugeführt und in den Ofenraum 4 zurückgeleitet wird. Dabei bleibt der Gesamtvolumenstrom des Ablenk-Gasstroms zeitlich konstant. Diese, in Bezug auf die Brennerflamme 13a; 13b asymmetrische Zufuhr des Ablenk-Gasstroms oberhalb oder unterhalb der Brennerflamme 13a; 13b bewirkt eine zeitlich stufenweise Ablenkung der Hauptausbreitungsrichtung der Brennerflamme 13a; 13b, so dass diese um eine horizontale Schwenkachse eine Bewegung nach dem "Fächerprinzip" ausführt. Die Auftreffpunkte der Brennerflamme 13a; 13b auf der Schmelzoberfläche variieren in Abhängigkeit von der Position der Brennerflamme 13a; 13b. Die obere Position der Brennerflamme, die sich bei Einleitung des Ablenk-Gastroms durch den unteren Gaseinlass 10b einstellt, ist in Figur 1 mit der Bezugsziffer 13b gekennzeichnet, und die untere Position mit der Bezugsziffer 13a.

Alternativ zu der beschriebenen zeitlich stufenweisen Ablenkung der Brennerflamme 13a; 13b ist auch eine kontinuierliche Auf- und Abbewegung der Brennerflamme nach dem "Fächerprinzip" möglich. In diesem Fall wird mittels des Kugelventils 11 die Durchflussmenge des oberen und des untern Ablenk-Gasstroms kontinuierlich - entweder statistisch unregelmäßig oder zyklisch - variiert.

Da das umgewälzte Ofenabgas eine im Vergleich zum Ofeninnenraum 4 niedrigere Temperatur aufweist, trägt es zu einer Senkung der Temperatur der Brennerflamme 13a, 13b bei, wodurch die Bildung von NOₓ vermindert wird.

Alternativ zum Ablenk-Gasstrom in Form von Ofenabgas, wird die Brennerflamme 13a; 13b mittels eines Ablenk-Gasstroms in Form eines Sekundärsauerstoffstroms, der zur Verbrennung des Brennstoffs beiträgt, abgelenkt. Hierzu wird der Sekundärsauerstoffstrom wechselweise entweder über den oberen Gaseinlass 10a, oder über den unteren Gaseinlass 10b in den Ofenraum, 4 eingeleitet.

In jedem Fall wirkt die diskontinuierliche oder kontinuierliche Bewegung der Brennerflamme 13a; 13b nach dem "Fächerprinzip" einer Überhitzung der Alumiumschmelze 5 und des Ofenmaterials entgegen, was den Metallverlust durch Oxidation und Verdampfung sowie den Verschleiß des Ofens vermindert.

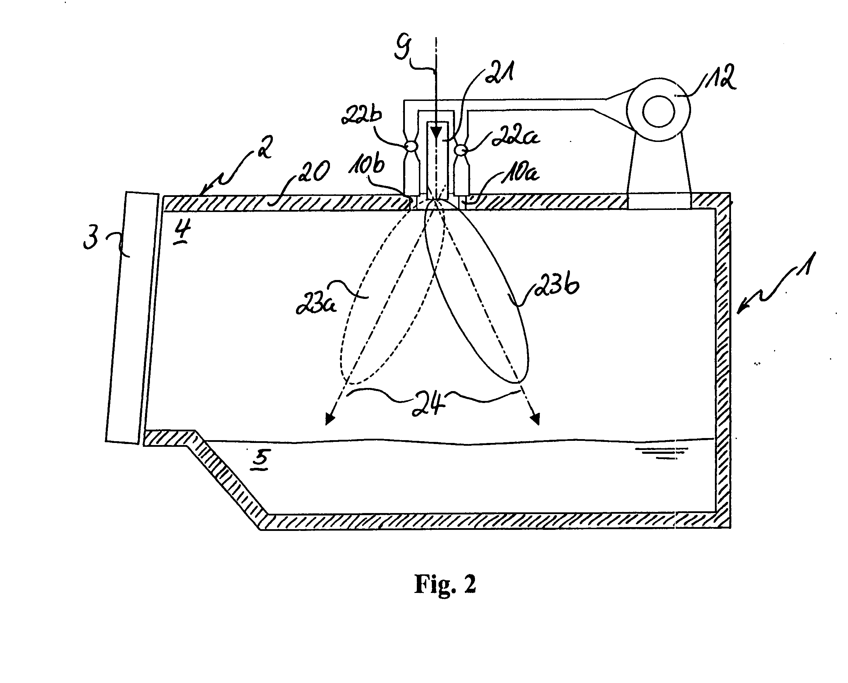

Sofern bei dem in **Figur 2** dargestellten Herdofen 1 identische Bezugsziffern wie in Figur 1 verwendet sind, so sind damit gleich oder äquivalente Bauteile oder Bestandteile des Herdofens 1 gemäß Figur 1 bezeichnet. Auf die entsprechenden Erläuterungen wird verwiesen.

Bei dem Herdofen 1 gemäß Figur 2 ist anstelle eines horizontal orientierten Sauerstoffbrenners 21 ein im Ofengewölbe 20 eingesetzter Sauerstoffbrenner 21 mit vertikal orientierter Längsachse vorgesehen. Beiderseits des Sauerstoffbrenners 21 sind Gaseinlässe 10a; 10b für einen Ablenk-Gasstrom vorgesehen. Die Gaseinlässe 10a; 10b sind jeweils über ein Ventil 22a; 22b mit einem im Gewölbebereich des Ofengehäuses 2 montierten Heißgasgebläse 12 verbunden, mittels dem Abgas aus dem Ofenraum 4 abgesaugt und im Kreislauf einem der beiden Gaseinlässe 10a; 10b zugeführt wird.

Nachfolgend wird ein Ausführungsbeispiel für das erfindungsgemäße Verfahren anhand Figur 2 näher erläutert:

Eine Charge Aluminiumschrott wird im Ofenraum 4 aufgeschüttet und mittels des Sauerstoffbrenners 21 erhitzt und erschmolzen. Hierzu wird dem Sauerstoffbrenner 21 der Brennstoff und Sauerstoff zugeführt, so dass sich eine Brennerflamme 23a; 23b bildet, die auf die Oberfläche der Schüttung aus Aluminiumschrott bzw. die Schmelzoberfläche gerichtet ist.

Um ein Überhitzen der Schmelze 5 durch die Brennerflamme 23a; 23b zu verhindern, wird die lokale Einwirkung der Brennerflamme 23a; 23b auf die Schmelze 5 von Zeit zu Zeit verändert, indem die Brennerflamme 23a; 23b seitlich ausgelenkt und dadurch ihre Ausbreitungsrichtung (Richtungspfeile 24) verändert wird. Die Auslenkung der Brennerflamme 23a; 23b erfolgt dadurch, dass über das Heißgasgebläse 12 Abgas aus dem Ofenraum 4 abgesaugt und wechselweise entweder dem linken Gaseinlass 10a oder dem rechten Gaseinlass 10b zugeführt und in den Ofenraum 4 zurückgeleitet wird. Dabei bleibt der Gesamtvolumenstrom des Ablenk-Gasstroms zeitlich konstant. Diese, in Bezug auf die Brennerflamme 23a; 23b asymmetrische Zufuhr des Ablenk-Gasstroms seitlich zur Brennerflamme 23a; 23b bewirkt eine diskontinuierliche Ablenkung der Hauptausbreitungsrichtung der Brennerflamme 23a; 23b, so dass diese um eine horizontale Schwenkachse eine Bewegung nach dem "Fächerprinzip" ausführt. Die Auftreffpunkte der Brennerflamme 23a; 23b auf der Schmelzoberfläche variieren in Abhängigkeit von der Position der Brennerflamme 23a; 23b. Die maximal nach rechts ausgelenkte Position der Brennerflamme, die sich bei Einleitung des Ablenk-Gastroms durch den linken Gaseinlass 10b einstellt, ist in Figur 2 mit der Bezugsziffer 23b gekennzeichnet, und die gegenüberliegende Position mit der Bezugsziffer 23a. Die jeweils über die Gaseinlässe 10a; 10b dem Ofenraum 4 zugeführten Gasströme werden mittels der Ventile 22a bzw. 22b eingestellt und geregelt.

## Patentansprüche

1. Verfahren zum Einschmelzen von Metallschrott in einem Ofen, durch Erzeugen einer Metallschmelze unter Einsatz mindestens eines Brenners, mittels dem durch Zúfuhr von Sauerstoff und Brennstoff eine in den Ofen gerichtete und auf die Metallschmelze einwirkende Brennerflamme erzeugt wird, wobei die lokale Einwirkung der Brennerflamme (13a; 13b; 23a; 23b) auf die Metallschmelze (5) kontinuierlich oder stufenweise verändert wird, wobei
Hauptausbreitungsrichtung (14; 24) der Brennerflamme (13a; 13b; 23a; 23b) kontinuierlich oder stufenweise verändert wird, **dadurch gekennzeichnet, dass** die Veränderung der Hauptausbreitungsrichtung (14; 24) durch Ablenkung der Brennerflamme (13a; 13b; 23a; 23b) erfolgt, wobei
die Ablenkung der Brennerflamme (13a; 13b; 23a; 23b) durch Einwirkung eines Ablenk- Gasstromes (10a; 10b) bewirkt wird.

2. Verfahren nach Anspruch 1, **dadurch gekennzeichnet, dass** die Hauptausbreitungsrichtung (14; 24) mit der Horizontalen einen Kippwinkel einschließt, und dass der Kippwinkel fortwährend verändert wird.

3. Verfahren nach Anspruch 1, **dadurch gekennzeichnet, dass** der Brenner (8; 21) um eine im wesentlichen vertikale Schwenkachse schwenkbar ist, und dass die Hauptausbreitungsrichtung (14; 24) der Brennerflamme (13a; 13b; 23a; 23b) parallel zur Ablenkung durch den Ablenkgasstroms durch Schwenken um die Schwenkachse fortwährend verändert wird.

4. Verfahren nach einem der Ansprüche 1 bis 3, **dadurch gekennzeichnet, dass** der Ablenk-Gasstrom (10a; 10b) wechselweise beiderseits der Brennerflamme (13a; 13b; 23a; 23b) in den Ofen (4) eingespeist und verändert wird.

5. Verfahren nach einem der Ansprüche 1 bis 4, **dadurch gekennzeichnet, dass** als Ablenk-Gasstrom die Sauerstoff-Zufuhr zum Brenner eingesetzt wird.

6. Verfahren nach einem der Ansprüche 1 bis 4, **dadurch gekennzeichnet, dass** als Ablenk-Gasstrorn ein Ofenabgas (10a; 10b) eingesetzt wird.

7. Verfahren nach Anspruch 6, **dadurch gekennzeichnet, dass** der Ablenk-Gasstrom durch Umwälzung von Ofenabgas (10a; 10b) mittels eines Heißgasgebläses (12) erzeugt wird.

## Claims

1. Method for melting metal scrap in a furnace by production of a metal melt using at least one burner by means of which a flame directed into the furnace and acting on the metal melt is created by the supply of oxygen and fuel, wherein the local effect of the burner flame (13a; 13b; 23a; 23b) on the metal melt (5) is changed continuously or in stages, wherein the main propagation direction (14; 24) of the burner flame (13a; 13b; 23a; 23b) is changed continuously or in stages, **characterized in that** the change in the main propagation direction (14; 24) is effected by deflecting the burner flame (13a; 13b; 23a; 23b), wherein the deflection of the burner flame (13a; 13b; 23a; 23b) is effected by the effect of a deflection gas stream (10a; 10b).

2. Method according to Claim 1, **characterized in that** the main propagation direction (14; 24) encloses an inclination angle with the horizontal, and that the inclination angle is constantly changed.

3. Method according to Claim 1, **characterized in that** the burner (8; 21) can be pivoted about an essentially vertical pivot axis, and that the main propagation direction (14; 24) of the burner flame (13a; 13b; 23a; 23b) is constantly changed parallel to the deflection by the deflection gas stream by pivoting about the pivot axis.

4. Method according to one of Claims 1 to 3, **characterized in that** the deflection gas stream (10a; 10b) is admitted to the furnace (4) alternately on either side of the burner flame (13a; 13b; 23a; 23b) and is changed.

5. Method according to one of Claims 1 to 4, **characterized in that** the oxygen supply to the burner is employed as deflection gas stream.

6. Method according to one of Claims 1 to 4, **characterized in that** a furnace waste gas (10a; 10b) is employed as deflection gas stream.

7. Method according to Claim 6, **characterized in that** the deflection gas stream is created by circulation of furnace waste gas (10a; 10b) by means of a hot gas blower (12).

## Revendications

1. Procédé pour la fusion de mitrailles dans un four par production d'un bain de fusion par la mise en oeuvre d'au moins un brûleur, au moyen duquel une flamme de brûleur dirigée dans le four et agissant sur le bain de fusion est produite par l'apport d'oxygène et de combustible, l'action locale de la flamme de brûleur (13a, 13b, 23a, 23b) sur le bain de fusion (5) étant modifiée progressivement ou par gradins, la direction principale de propagation (14, 24) de la flamme de brûleur (13a, 13b, 23a, 23b) étant modifiée progressivement ou par gradins, **caractérisé en ce que** la modification de la direction principale de propagation (14, 24) est réalisée par déviation de la flamme de brûleur (13a, 13b, 23a, 23b), la déviation de la flamme de brûleur (13a, 13b, 23a, 23b) étant réalisée par l'action d'un flux de gaz déviant (10a, 10b).

2. Procédé selon la revendication 1, **caractérisé en ce que** la direction principale de propagation (14, 24) forme un angle d'inclinaison par rapport à l'horizontale et que l'angle d'inclinaison est modifié en permanence.

3. Procédé selon la revendication 1, **caractérisé en ce que** le brûleur (8, 21) peut pivoter autour d'un axe essentiellement vertical et que la direction principale de propagation (14, 24) de la flamme de brûleur (13a, 13b, 23a, 23b) est modifiée en permanence parallèle à la déviation par le flux de gaz déviant par un pivotement autour de l'axe de pivotement.

4. Procédé selon une des revendications 1 à 3, **caractérisé en ce que** le flux de gaz déviant (10a, 10b) est injecté dans le four (4) alternativement des deux côtés de la flamme de brûleur (13a, 13b, 23a, 23b) et **en ce qu'**il varie.

5. Procédé selon une des revendications 1 à 4, **caractérisé en ce que** l'admission d'oxygène dans le brûleur s'effectue sous la forme d'un flux de gaz déviant.

6. Procédé selon une des revendications 1 à 4, **caractérisé en ce que** des gaz de combustion du four (10a, 10b) sont utilisés sous forme d'un flux de gaz déviant.

7. Procédé selon la revendication 6, **caractérisé en ce que** le flux de gaz déviant est généré par circulation de gaz de combustion du four (10a, 10b) au moyen d'une soufflante à gaz chauds (12).
